# EUROPEAN PATENT APPLICATION

(11) **EP 3 847 891 A1**
(43) Date of publication of application: **14.07.2021**
(21) Application number: 18932742.2
(22) Date of filing: 14.11.2018
(51) Int. Cl.: A01N 63/00

(54) **COMPOSITION FOR COATING AND ENCRUSTING INDUSTRIAL OR NON-INDUSTRIAL SEEDS FOR BIOLOGICAL CONTROL OF PHYTONEMATODE AND PHYTOPATHOGENIC SPECIES**

(30) Priority: 06.09.2018 BR 102018068118
(71) Applicant: Agrivalle Brasil Industria e Comércio de Produtos Agrícolas Ltda, 13320-000 Salto / SP (BR)
(72) Inventor: MARTINS, Thales Facanali, 13333-515 INDAIATUBA / SP (BR); BERNARDO, Eduardo Roberto De Almeida, 13331-284 INDAIATUBA / SP (BR)
(74) Representative: Pereira Garcia, João Luís
(86) International application number: PCT/BR2018/050423
(87) International publication number: WO 2020/047625

(57) **Abstract**

The present patent relates to a composition for coating and encrusting seeds of cultivated plants for biological control of phytonematode and phytopathogenic species and more specifically relates to a composition of Bacillus spp. with nematocidal and fungicidal effects to mitigate damage and to control phytonematode species. Particularly, the composition relates to a formulation with quantities of Bacillus subtilis or mutants thereof, Bacillus licheniformis or mutants thereof, or Bacillus amyloliquefaciens or mutants thereof, used in conjunction or in isolation, concomitantly with additives and excipients, in compositions for coating and encrusting seeds for biological control purposes and with nematocidal and fungicidal properties in cultivated plants.

## Description

### TECHNICAL FIELD OF THE INVENTION

The present patent relates to a composition for coating and encrusting seeds of cultivated plants for biological control of phytonematodes and phytopathogenic species and more specifically relates to a composition of *Bacillus spp.* with nematocidal and fungicidal effects to mitigate damage and to control phytonematode species including, without being limited to, *Pratylenchus brachyurus, Pratylenchus zea, Meloidogyne incognita, Meloidogyne iavanica, Heterodera glycines, Rotylenchulus renlformis, Pratylenchus coffea, Meloidogyne exiqua, Helicotilechus dihystera,* and phytopathogens such as, but not limited to, *Rhizoctonia solani, Fusarium sotani, Fusarium oxysporum, Fusarium graminearum, Fusarium semitectum, Colletotrichum gloeosporioides, Colletotrichum truncatum, Colletotrichum lindemuthianum, Macrophomna phaseolina, Sclerotinia sclerotiorum, Botrytis cinerea, 'Penicillium digitatum',* concomitantly with polymers and/or coating/encrusting components of seeds of cultivated plants including, without being limited to, *Brachiaria spp. ('Brachiaria brizantha, Brachiaria decumbens, Brachiaria humidicola, Brachiaria mutica, Brachiaria ruziziensis, Brachiaria arrecta, Brachiaria dictyneura), Panicum spp. (Panicum maximum), Sorghum spp., Pennisetum americanum, Glycine max, Zea mays, Gossypium hirsutum,* greenery *(Solanum lycopersicum, Allium cepa, Lactuca sativa, Daucus carota, Capsicum annuum* group), forestry *(Eucalyptus spp., Tectona grandis, Hevea brasiliensis, Pinus sp.), Nicotiana tabacum,* ornamental, *Crotalaria spp. (Crotalaria juncea, Crotalaria spectabilis, Crotalaria ochroleuco, Crotalaria paulina, Crotalaria breviflora)* used for treating industrial or non-industrial seeds. Pertaining to the biotechnology technical sector, this composition improves the efficiency specifically in coating and encrusting aid microorganisms through the use of distinct and complementary mechanisms of action. Particularly, the composition is a formulation comprising *Bacillus subtilis* and mutants thereof, *Bacillus licheniformis* and mutants thereof, and *Bacillus amyloliquefaciens* and mutants thereof.

### BACKGROUND OF THE INVENTION

In the current world-wide agricultural scenario, the production profits have been many times associated to the gradual productivity increases without a corresponding increase in the cultivable area. Such productivity increases have been attained by means of significant advances in the cultivation techniques, use of varieties which are more suited to biotic and abiotic factors, adequacy of the nutritional need of the plant and, nevertheless, the mitigation of damages caused by agricultural pests.

Amongst such advances, the pest control is still considered as the biggest challenge in the maintenance of crop productivity, wherein several techniques can be employed, with a higher or lower degree of efficiency, but generally the use of chemical defensives is the most used method.

However, for the control of phytonematodes and phytopathogens, the use of agrochemicals has frequently shown unsatisfactory results. A great part of this problem derives from the indiscriminate and excessive use of said molecules which have frequently caused intoxication of humans and/or animals, concomitantly with the contamination of the environment. Such events have led to an increase of the public opinion on the use of nematicides, and consequently to an ever-growing search for alternate safer handling techniques.

Thus, alternative controls for phytonematodes and phytopathogens have been employed whenever possible, but adversities inherent to the biology of said organisms usually make the use of some techniques unfeasible. For example, varieties of resistant cultivars are hardly available, while the rotation culture is impracticable by virtue of the costs or the wide range of hosts for some species (Bird et al., 2003).

The formation of straw for the direct planting system has become a viable alternative for diminishing the number of phytonematodes and certain diseases, since most of the *Brachiaria* used in this system are resistant to most of phytonematodes (except for *Pratylenchus brachyurus* - Boletim de pesquisa da soja 2010 - FMT) and they do not host some diseases present in the main species of cultivated plants used to feed human beings.

In this context, the biologic control of phytonematodes and phytopathogens using micro-organisms has been considered as a viable option, either for treating the seeds of crops of interest, or for treating the seeds of pastures for the formation of straw. Compared to other technologies, its main advantage is again the possibility of exploring different ways of action of agrochemicals (Zucchi et al. 2008). Indeed, mechanisms of action such as antagonism and parasitism have been widely used in commercial products.

Antagonism is usually the predominant action of bacteria against phytonematodes. In addition to the direct effect on the mortality of phytonematodes, such nematocidal compounds can act directly on the emergence of eggs or mobility of nematodes, and also cause indirect effects such as changes in root exudates or induction of resistance (Sikora & Hoffmann-Hergarten, 1992; Hasky-Günther et al. 1998).

The use of bacteria as biological control agents is a promising alternative in the productive system (Hallmann et al. 2004) such as, for example, *Meloidogyne graminicola,* where *Bacillus megaterium* reduced 40% of the penetration and formation of boughs of such phytonematodes in rice roots, besides diminishing 60% of its migration to rhizosphere and reducing 60% the emergence of eggs (Sikora & Padgham 2007).

According to Da Silva et al. (2007), the use of *Bacillus subtilis* for controlling *Pratylenchus brachyurus* was fair in the chemical treatment using Abamectin, exhibiting extremely low populations of such phytonematodes in the soil, about 1 phytonematode/cm³ of soil, thus reducing about 90% of said population compared to the standard treatment. Other results in this line of research, also using *Bacillus subtilis* for treating seeds, is evidenced by Da Silva et al. (2007), showing that this alternative handling technique caused reductions in the order of 53.87% of the population of *Pratylenchus spp.* 30 days after sowing, adding 18% in productivity.

Similar results had been attained by Higaki (2012) using *Bacillus subtilis* for controlling *Rotylenchulus reniformis* and *Pratylenchus brachyurus* in cotton plants. The treatment using said microorganism resulted in reductions higher than 50% in the population of said phytonematodes in roots of the crop. Other interesting data reported by the author is that the plants treated with said microorganism exhibited increments in the fresh mass of roots and in the aerial portion in the order of 36 and 47%, respectively, in view of the standard treatment. According to Araújo et al. (2008), the mechanisms of action responsible for the promotion of plant growth can be linked initially to the direct inhibition of the pathogen and induction of systemic resistance, amongst others. It is usually difficult to recognize the mechanisms and associate same with the direct growth promotion, since more than one mechanism is produced by the bacteria.

For the biologic control of phytopathogens in cultivated plants, Cook & Baker (1983) have reported that the characterization of the effectiveness of this handling technique is a reduction in the sum of inoculum or the activities that determine the disease caused by a pathogen, effected by or through one or more organisms other than humans. In view of this concept regarding the action, Bettiol et al. (2008) have reported that the use of *Bacillus subtilis* has been successful in the control of powdery mildew (caused by fungus *Uncinula necato)* and gray rottenness (caused by fungus *Botrytis cinerea)* in grape and other crops many years ago in Chile. According to Mattos (2010), the use of a mixture of *B*. *subitilis* and *B. licheniformis* has resulted in significant reductions in the incidence of green mildew caused by fungus *Penicillium digitatum* in post-harvest "pear" orange fruit.

Genus *Bacillus spp.* is known as an excellent source of antimicrobial compounds (Huang & Chang, 1975; Baker et al., 1983; Motomura & Hirooka, 1996), and the evidence that the production of phytopathogen-inhibiting substances produced by several *Bacillus spp.* isolates is especially important in the comprehension of the mechanisms of action of said microorganisms for the antagonism. Antagonist bacteria such as *B. subtilis,* generally act mainly through antibiosis, and occasionally through parasitism and competition. Thus, the disease control can be effective in view of the substances produced, but not only because of the mass introduction of biocontrol agents (Arras & Arru, 1997). Microorganisms acting through antibiosis generally exhibit a wide spectrum of action, and so the production of toxic substances in the inhibition of fungi is more effective than any other mechanism of action involved.

Despite these advantages, most of the existing products are based on the premise of exploring a single microorganism to control phytonematodes. As disclosed, some biological control agents have more than one mechanism of action which can act directly or indirectly on the target phytonematodes and phytopathogens. However, associations among several biological control agents, thus extending the spectrum of action of such microorganisms against phytonematodes, have not been widely explored yet.

### ANALYSIS OF THE STATE OF THE ART

In a research conducted in specialized data bases, a document related to the biological control of phytonematodes and phytopathogens has been found, such as document No. PI 0605722-5 which refers to the use of pumpkin (*Cucurbita spp*.) and papaya (*Carica papaya*) seed processing products for controlling phytonematodes and other phytopathogens and soil insects. The present patent application is directed to the use of pumpkin (*Cucurbita spp*.) and papaya (*Carica papaya*) seed processing products for controlling phytonematodes and other phytopathogens and soil insects, more particularly pesticide precursor preparations in the form of pumpkin and papaya flours, brans or extracts introduced into the soil, or separately, similarly to granulated fertilizers, either directly or mixed with carriers such as vermiculite, starch based polymers, or organic carriers such as ground corn cobs, shard fiber, pinus fiber and others, to optimize the handling properties thereof, and the extracts can be applied to the soil through irrigation. Nematode biological control microorganisms such as nematophage fungi, rhizobacteria, endophytic bacteria and *'Pasteuria penetrans',* can be added to the formulation for the purpose of increasing the control efficiency. This invention, containing natural and biodegradable products, will be applied to the agricultural sector to replace highly toxic pesticides without causing any harm to human beings and the environment.

Although said document has a solution for biologically controlling phytonematodes and phytopathogens, it is different from the novel compound, and therefore it is not considered to be a prior art compared to the composition claimed herein, thus assuring that it satisfies the legal patentability requirements.

### OBJECTS OF THE INVENTION

Thus, the object or the present invention is the application of effective compositions for coating and encrusting seeds to control phytonematodes and phytopathogens, acting on the control of target pests concomitantly with polymers and/or coating/encrusting components of seeds of cultivated plants including, without being limited to, *Brachiaria spp. (Brachiaria brizantha, Brachiaria decumbens, Brachiaria humidicola, Brachiaria mutica, Brachiaria ruziziensis, Brachiaria arrecta, Brachiaria dictyneura), Panicum spp. (Panicum maximum), Sorghum spp., Pennisetum americanum, Glycine max, Zea mays, Gossypium hirsutum,* greenery *(Solanum lycopersicum, Allium cepa, Lactuca sativa, Daucus carota, Capsicum annuum* group), forestry *(Eucalyptus spp., Tectona grandis, Hevea brasiliensis, Pinus sp.), Nicotiana tabacum,* ornamental, *Crotalaria spp. (Crotalaria juncea, Crotalaria spectabilis, Crotalaria ochroleuco, Crotalaria paullna, Crotalaria breviflora)* used for treating industrial or non-industrial seeds. This composition involves coating and encrusting seeds and the use of *Bacillus spp.* for controlling phytonematodes and phytopathogens.

### BRIEF DESCRIPTION OF THE INVENTION

The present invention refers to the effective use of a composition for coating and encrusting containing quantities of *'Bacillus subtilis'* or mutants thereof, *'Bacillus licheniformis'* or mutants thereof, *'Bacillus amyloliquenfacies'* or mutants thereof, concomitantly with additives and excipients, in biological compositions having nematocidal and fungicidal properties for controlling phytonematodes and phytopathogens in plants added to the coating/encrusting of industrial or non-industrial seeds.

### ADVANTAGES ATTAINED

The following advantages can be attained through the use of the thus-obtained composition for coating and encrusting industrial or non-industrial cultivated seeds, containing *Bacillus spp.* added to polymers and/or coating/encrusting components of industrial or non-industrial seeds:
- it provides an advantageous process, since it provides an easier drying and improves the physical aspects of the mixtures in the coating and encrusting process;
- it favors the development of cultivated plants, providing incremented root and leaf growth parameters;
- it is an alternative to the use of chemical nematicides, thus satisfying the interest of the society on more environmentally-friendly products;
- it is an alternative to the use of chemical fungicides, thus satisfying the interest of the society on more environmentally-friendly products;
- it explores a higher range of mechanisms of action against phytonematodes, thus assuring a higher efficiency;
- it explores a higher range of mechanisms of action against phytopathogens, thus assuring a higher efficiency;
- it reduces the number of phytonematodes resistant to chemicals;
- it reduces the number of phytopathogens resistant to chemicals;
- it is easy to operate when the technology for treating industrial or non-industrial seeds is used;
- it can be used in the constituents for coating/encrusting industrial or non-industrial seeds of *Brachiaria spp. (Brachiaria brizantha, Brachiaria decumbens, Brachiaria humidicolo, Brachiaria mutica, Brachiaria ruziziensis, Brachiaria arrecta, Brachiaria dictyneura), Panicum spp. (Panicum maximum), Sorghum spo., Pennisetum americanum, Glycine max, Zea mays, Gossypium hirsutum,* greenery *(Solanum lycopersicum, Allium cepa, Lactuca sativa, Daucus carota, Capsicum annuum),* forestry *(Eucalyptus spp., Tectona qrondis, Hevea brositiensis, Pinus sp.), Nicotiana tabacum,* ornamental, *Crotalaria spp. (Crotalaria juncea, Crotalaria spectabitis, Crotalaria ochroleuca, Crotalaria paulina, Crotalaria breviflora).*

The scope of the present patent application should not be limited to the sample examples, but to the terms defined in the claims and the equivalents thereof.

### DESCRIPTION OF THE INVENTION

The present invention refers to a "Composition for coating and encrusting industrial or non-industrial seeds for biological control of phytonematode and phytopathogenic species", more specifically a composition for coating/encrusting of seeds for biological control of phytonematodes and phytopathogens.

According to the present invention, the composition is aimed at coating and encrusting industrial or non-industrial seeds for biological control of phytonematodes and phytopathogens, comprising microorganisms, but not limited to, a final concentration of (in colony forming units, u.f.c.):
- *Bacillus subtilis* - 1.0 x 10¹⁰ u.f.c,/g
- *Bacillus licheniformis* -1.0 x 10¹⁰ u.f./g
- *Bacillus amyloliquenfacies* -1.0 x 10⁶ u.f.c,/g

Isolates have been identified and rated by the Coleção Brasileira de Microrganismos de Ambiente e Indústria (CBMAIIUNICAMP), where they were deposited.

The composition has the following concentrations:

| | |
|---|---|
| *Bacillus sublitis* | 1.0 to 20.0% |
| *Bacillus licheniformis* | 1.0 to 20.0% |
| *Bacillus amyloliquenfacies* | 1.0 to 10.0% |
| Additives | 1.0 to 20.0% |
| Excipients | 95.0 to 10.0% |

The additives can be, but are not limited to, dispersants chosen from the group consisting of water-soluble ionic polymers, water-soluble anionic polymers, surfactants selected from the group consisting of anionic surfactants and non-ionic surfactants, and the combinations thereof.

The excipients can be, but are not limited to, the group that consists of: silicas, talc, bentonite, carbohydrates, carbonates, casein, milk serum and milk derivatives, and the combinations thereof.

The composition should be used as a formulation in a wettable powder. However, other formulations containing said microorganisms such as emulsions, concentrated suspensions, granules, and the like, also can be used.

### EXAMPLES

A composition containing 7.0% *Bacillus subtilis,* 7.0% *Bacillus licheniformis,* 4.5% *Bacillus amyloliquefaciens,* 3.0% acrylic styrene polymer, 1.0% anionic surfactant, and 67.5% inert component was formulated to evaluate its efficiency in the control of phytonematodes. The examples below illustrate the use of this composition:

### Example 1: Use of a biological composition in the treatment of industrial encrusted seeds of Brachiaria for controlling Pratylenchus brachyurus.

### Object

To evaluate the effect under field conditions of *Brachiaria spp.* seeds encrusted with a biological composition in populations of *Pratylenchus brachyurus* and possible increments in plants, by treating the seeds.

### Material and Methods

Experimental layout: fully casualized blocks, with six treatments and five repetitions. The plants were disposed in six rows 6 m long each and with a distance of 50 cm between the rows, wherein the useful portion was formed by four central rows, totaling 10 m².

Treatments and form of application: The Brachiaria seeds used in the assay were of *B. ruziziensis* and *B. brizantha CV BRS Piatã* species which were previously encrusted and treated with the biological composition, encrusted seeds without the biological composition, and naked seeds without any encrustation. The seeds were sown manually in the planting furrow. At the 90th day after sowing (DAS), the plants were removed carefully, preserving the whole root system, and packed into plastic bags together with the soil obtained from the rhyzosphere. The aerial portion was separated from the root system to obtain both the fresh weight and dry weight of the aerial portion. Next, the root systems were carefully washed in a stream of water, and the roots were kept on a filter paper until the excess water was eliminated, and then weighed, thus obtaining the fresh weight of the roots of such samples. After the evaluation, the roots were cut into pieces of approximately 1.0 cm and crushed in water for 10 seconds with the aid of a liquefier, according to Coolen & D'Herde method (1972). In order to obtain the soil population, the flotation and centrifugation method was used, as described by Jenkins (1964). The quantification of *P. brachyurus* in each suspension was carried out with the aid of Peters chamber and a biologic microscope. After the data were obtained, the number of *P. brachyurus*/gram of root, the number of specimens per 100 cm³ of soil and the total number of nematodes (soil + root) were determined. To attain the relative efficacy of the evaluated treatments (% of control), the average values of the number of nematodes obtained per gram of root in the sample (seed with no encrustation) were considered as 100%, as proposed by Abbott (1925).

### Results and Discussion

The results obtained for the fresh weight of the aerial portion and roots at the 90th day after sowing have not shown any statistical difference when encrusted seeds were used, irrespective of the species evaluated (Table 1). However, in both species tested, the values of the aerial portion and root weight were higher when the seeds were encrusted with the biological formulation, thus attaining a higher production of forage when compared to those which have not been encrusted. Said increment is more prominent in forage *B. brizantha CV BRS Piatã,* which exhibited gains between 40 and 55% for the dry mass of the aerial portion and root, respectively, in relation to the treatment without encrustation and the biological composition. In a comparison between encrusted seeds, those which were administered with the biological composition have also shown an increment in the dry mass of the root and aerial portion in the order of 46 e 40%, respectively.

-

**Table 1. Weight of the aerial portion (g) and root (g) at the 90^{th} day after sowing, using Brachiaria seeds subjected to different treatments in the seeds.**

| **Treatments** | Weight of aerial portion (g) | | Weight of root (g) | |
|---|---|---|---|---|
| | **BR** | **BP** | **BR** | **BP** |
| Non-encrusted seed | 2967.12 | 2345.52 | 369.94 | 400.79 |
| Encrusted seed without biological composition | 2798.05 | 2249.66 | 362.65 | 441.01 |
| Seed encrusted with biological composition | 3255.30 | 3291.16 | 393.03 | 619.34 |
| **V.C. (%)** | **39,04** | **32.50** | **45.65** | **33.61** |

| | | | | |
|---|---|---|---|---|
| DAS - days after sowing; BR- *B. ruziziensis;* BP- *B. brizantha CV BRS Piatã.* | | | | |

After evaluating the total number of nematodes in the soil together with the roots and the number of nematodes per gram of root, significant differences among the treatments have not been noticed (Table 2). However, it should be pointed out that the treatment of seeds in *B. ruziziensis* encrusted with the biological composition could reduce the population of nematodes from 39 and 50% in relation to the treatments of non-encrusted seeds and encrusted seeds, respectively. After examining the quantity of nematodes per gram of root, it was noticed that encrusted seeds that were applied the biological composition showed a reduction higher than 50% ion both species studied, which data corroborate Da Silva et al. (2007) and Higaki (2012). An interesting fact that can be noticed in this study is that *B. brizantha CV BRS Piatã* species exhibited a root mass higher than that of *B. ruziziensis* species, and showed 58% less nematodes per gram of root when treated with the biological composition, thus indicating that the nematode is harmful and affects the production of roots in these two forage species studied.

-

**Table 2. Evaluation of the number of nematodes in the soil and roots using seeds of Brachiaria subjected to different treatments in the seeds.**

| | **Forage species** | | | |
|---|---|---|---|---|
| | **BR** | **BP** | **BR** | **BP** |
| Non-encrusted seed | 8002.20 | 4203.70 | 26.26 | 10.92 |
| Encrusted seed without biological composition | 9819.30 | 3347.10 | 24.96 | 7.28 |
| Encrusted seed with biological composition | 4904.50 | 2998.90 | 13.00 | 5.46 |
| **V.C. (%)** | **33.03** | **27.95** | **49.65** | **29.59** |

| | | | | |
|---|---|---|---|---|
| BR- *B. ruziziensis;* BP- *B. brizantha CV BRS Piatã.* | | | | |

Based on the results obtained, it can be proved that the treatment of seeds of *B. ruziziensis; BP B. brizantha CV BRS Piatã* encrusted with the biological formulation controls *P. brachyurus,* and it can be recommended in the integrated handling of this nematode in the crop.

### Conclusions

The use of *Bacillus spp.* added to polymers and/or components for coating/encrusting industrial seeds is a viable alternative to the handling of *Pratylenchus brachyurus.* Further, in addition to the diversity of mechanisms of action of such specific microorganisms, this biological formulation expands the beneficial effects of said agents for controlling the mitigation of damages caused by said phytonematode.

The composition for biologic control of phytonematodes and phytopathogens should follow the following flow of events:
- Raw material: the raw materials that will make out the product should be received and manipulated by trained people;
- Mixture: the raw materials should be weighed and mixed according to the standard operational procedure (SOP) in the indicated ranges;
- Sampling: after being mixed, samples should be taken for verification and product warranty certification. The number of colony forming units (c.f.u.)/g of product should be analyzed;
- Packing: the formulated product complying with the guarantee specifications

should be packed in previously labeled plastic bottles or pouches of 1.0, 5.0 and 10.0 kg. The bottles/pouches should be sealed and closed; - Storage: the bottles/pouches are deployed on pallets and stored in a dry aired light-protected site, and shall remain in said condition until they are dispatched.

The present invention may be applied either by using plantation furrows, planting bars, treatment of seeds or even treatment of industrial seeds using sowing machines for the control of phytonematodes. The application method will have to be analyzed case by case and will depend on the technical conditions and needs of each producer.

### BIBLIOGRAPHICAL REFERENCES

Abbott WS. 1952. A method of computing the effectiveness of an insecticide. J. Econ. Entomol. 18:265-267.

Araújo, FF. 2008. Inoculação de sementes com Bacillus subtilis, formulado com farinha de ostra e desenvolvimento de milho, soja e algodão. Ciências e Agrotecnologia, Lavras, v. 2, p. 456-462.

ARRAS G & ARRU S. Mechanism of action of some microbial antagonists against fungal pathogens. Annali di Microbiologia ed Enzimologia 47:97-120.1997.

Atkins SD, Hidalgo-Diaz L, Kalisz H, Mauchline TH, Kirshc PR, Herry BR. 2003. Development of a new management strategy for the control of root-knot nematodes (Meloidogyne spp.) in organic vegetable production. Pest Management Sci. 59:183- 189.

Bettiol W, Ghini R, Morandi MAB, Stadnik MJ, Kraus U, Stefanova M & Prado AMe. 2008. Controle biológico de doenças de plantas na America Latina. In: Alves, S.B. & Lopes, R.B. (Eds.) Controle Microbiano de Pragas na America Latina - Avanços e desafios. Piracicaba. FEALQ. 2008. pp. 303-331.

Bird DM, Opperman CH, Davies KG. 2003. Interactions between bacteria and plant-parasitic nematodes: now and then. Int. J. Parasito I. 33:1269-1276.

Boneti JIS, Ferraz S. 1981. Modificação do método de Hussey e Barker para a extração de ovos de Meloidogyne exígua de raízes de cafeeiro. Phytopatol. Bras. 6:553.

Cook RJ, Baker KF. 1983. The nature and practice of biological control of plant pathogens. St. Paul: APS, 1983. 539p.

Da Silva GJ, Vieira JD, Soares LF, Barros JF, Mendes SPSC, Geraldine AM. 2007. Chemical and biological control on Pratylenchus brachyurus godfrey in soybean crop management. 50° congresso Brasileiro de Fitopatologia.

De Mattos LPV. 2010. Controle de Guignardia citricarpa e Penicillium digitatum em Iaranja com óleos essenciais e agentes de biocontrole. Tese (doutorado) - Universidade Estadual Paulista, Faculdade de Ciências Agronômicas, 2010.

Hallmann J, Faupel A, Krechel A, Sikora RA, Berg G. 2004. Endophytic bacteria and biological control of nematodes. Bulletin OILB/SROP. 27:83-94.

Hasky-Günther K, Hoffmann-Hergarten 5, Sikora RA. 1998. Resistance against the potato cyst nematode Globodera pallida systemically induced by the rhizobacteria Agrobacterium radiobacter (G12) and Bacillus sphaericus (B43). Fund. Appl. Nematol. 21:511-517.

Higaki WA. 2012. Bacillus subtilis e abamectina no controle de Rotylenchulus reniformis e Pratylenchus brachyurus e alterações fisiológicas em algodoeiro em condições controladas. Dissertação (Mestrado em Agronomia) - Universidade do Oeste Paulista - Unoeste: Presidente Prudente - SP.

Huang T & Chang M. 1975. Studies on xanthobacidin, a new antibiotic from Bacillus subtilis active against Xanthomonas. Botanical Bulletin Academia Sinica 16:137-148. 1975.

Goettel MS, Hajek EA, Siegel JP, Evans HC. 2001. Safety of fungal biocontrol agents. In: Butt TM, Jackson C, Magan N (Eds.). Fungal as biocontrol agents: problems, progress and potential. Wallinford: Cabi. Capo 13, p. 347-376.

Jenkins WR. 1964. A rapid centrifugal-flotation technique for separating nematodes from soi/. Plant Disease Reporter, Lawrence, v. 48, 692p.

Kerry BR. 2000. Rhizosphere interactions and the exploitation of microbial agents for the biological control of plant-parasitic nematodes. Ann. Ver Phytopathol. 38:423-441. Motomura M & Hirooka EY. 1996. Microrganismos produtores de substâncias antifúngicas com perspectivas para aplicação no controle de Fusarium moniliforme. Arquivos de Biologia e Tecnologia 39:471-479.1996.

Oliveira GRF, Silva MS, Proença SL, Bossolam JW, Camargo JA, Franco FS, Sá ME. 2017. Influência do bacillus subtilis no controle biológico de nematóides e aspectos produtivos do feijoeiro. Brazilian Journal of Biosystems Engineering v. 11(1): 47-58. Sikora RA, Hoffmann-Hergaten S. 1992. Importance of plant health-promoting rhizobacteria for the control of soil-borne fungal diseases and plant parasitic nematodes. Arab. J. Plant Prot. 10:48-53.

Sikora RA, Padgham JL. 2007. Biological control potential and modes of action of Bacillus megaterium against Meloidogyne graminicola on rice. Crop Protection 26:971- 977.

Weber HBFE, Fel/er C, Wicke MHH, Meier U, Boom T, Lancashire PD, Buhr FL, Hack H, Klose FR, Strauss R. 2001. Estadios de Ias plantas mono- y dicotyledóneas: BBCH Monografia. Ed. 2, 2001.

Zucchi TD, Moraes LAB, Melo 15. 2008. Streptomyces sp. ASBV-1 reduces aflatoxin accumulation by Aspergillus parasiticus in peanut grain. J. Appl. Microbiol. 105:2153- 2160.

## Claims

1. **COMPOSITION FOR COATING AND ENCRUSTING INDUSTRIAL OR NON-INDUSTRIAL SEEDS FOR BIOLOGICAL CONTROL OF PHYTONEMATODE AND PHYTOPATHOGENIC SPECIES,** more precisely a composition formulated from a mixture of Bacillus spp. having nematocidal and fungicidal effects on the mitigation of damages and control of phytonematodes, ***characterized* in that** it is a composition created for coating and encrusting industrial or non-industrial seeds comprising microorganisms in colony forming units, u.f.c., at any concentration: bacillus subtilis - 1.0 x 10¹⁰ u.f.c./g; bacillus licheniformis - 1.0 x 10¹⁰ u.f.c./g; bacillus amyloliquenfacies - 1.0 x 10⁶ u.f.c./g.

2. **COMPOSITION FOR COATING AND ENCRUSTING INDUSTRIAL OR NON-INDUSTRIAL SEEDS FOR BIOLOGICAL CONTROL OF PHYTONEMATODE AND PHYTOPATHOGENIC SPECIES,** according to claim 1, ***characterized* in that** elements of the composition contain the following concentrations: *bacillus subtilis* 1,0 a 20,0%; *bacillus licheniformis* 1.0 to 20.0%; *bacillus amyloliquefaciens* 1.0 to 10.0%; additives 1.0 to 20.0%; excipients 95.0 to 10.0%.

3. **COMPOSITION FOR COATING** AND **ENCRUSTING INDUSTRIAL OR NON-INDUSTRIAL SEEDS FOR BIOLOGICAL CONTROL OF PHYTONEMATODE AND PHYTOPATHOGENIC SPECIES,** according to claim 1, ***characterized* in that** the additives are dispersants selected from the group consisting of water-soluble ionic polymers, water-soluble anionic polymers, surfactants selected from the group consisting of anionic surfactants and non-ionic surfactants, and the combinations thereof.

4. **COMPOSITION FOR COATING AND ENCRUSTING INDUSTRIAL OR NON-INDUSTRIAL SEEDS FOR BIOLOGICAL CONTROL OF PHYTONEMATODE AND PHYTOPATHOGENIC SPECIES,** according to claim 1, ***characterized* in that** the excipients belong to the group that consists of silicas, talc, bentonite, carbohydrates, carbonates, milk derivatives (serum and powder milk), and the combinations thereof.

5. **COMPOSITION FOR COATING AND ENCRUSTING INDUSTRIAL OR NON-INDUSTRIAL SEEDS FOR BIOLOGICAL CONTROL OF PHYTONEMATODE AND PHYTOPATHOGENIC SPECIES,** according to claim 1, ***characterized* in that** the composition is used, without any limitation, in wettable powder formulations, emulsions, concentrated suspensions, and granules.

6. **COMPOSITION FOR COATING AND ENCRUSTING INDUSTRIAL OR NON-INDUSTRIAL SEEDS FOR BIOLOGICAL CONTROL OF PHYTONEMATODE AND PHYTOPATHOGENIC SPECIES,** according to claim 1, ***characterized* in that** the components of the composition can be separated, particularly *bacillus subtilis* and mutants thereof, *bacillus licheniformis* and mutants thereof, and *bacillus amyloliquefaciens* and mutants thereof, in the process of coating and encrusting seeds for the phytosanitary handling of phytonematodes and phytopathogens, to be applied during the treatment of industrial or non-industrial seeds.

7. **COMPOSITION FOR COATING AND ENCRUSTING INDUSTRIAL OR NON-INDUSTRIAL SEEDS FOR BIOLOGICAL CONTROL OF PHYTONEMATODE AND PHYTOPATHOGENIC SPECIES,** according to claim 1, ***characterized* in that** the components of the composition can be separated, particularly *bacillus subtilis* and mutants thereof, *bacillus licheniformis* and mutants thereof, *bacillus amyloliquefaciens* and mutants thereof, in the process of coating and encrusting seeds for the phytosanitary handling of phytonematodes and phytopathogens, to be applied during the treatment of industrial or non-industrial seeds.

8. **COMPOSITION FOR COATING AND ENCRUSTING INDUSTRIAL OR NON-INDUSTRIAL SEEDS FOR BIOLOGICAL CONTROL OF PHYTONEMATODE AND PHYTOPATHOGENIC SPECIES,** according to claim 1, ***characterized* in that** the composition is applied for controlling phytonematodes including, without being limited to, *Pratylenchus brachyurus, Pratylenchus zeo, Meloidogyne incognita, Meloidogyne javanica, Heterodera glycines, Rotylenchulus reniformis, Pratylenchus coffea, Meloidogyne exiqua, Helicotilechus dihystera,* among others.

9. **COMPOSITION FOR COATING AND ENCRUSTING INDUSTRIAL OR NON-INDUSTRIAL SEEDS FOR BIOLOGICAL CONTROL OF PHYTONEMATODE AND PHYTOPATHOGENIC SPECIES,** according to claim 1, ***characterized* in that** the composition is used for controlling phytopathogens including, without being limited to, *Rhizoctonia solani, Fusarium solani, Fusarium oxysporum, Fusarium qraminearum, Fusarium semitectum, Colletotrichum gloeosporioides, Colletotrichum truncatum, Colletotrichum lindemuthianum, Macrophomna phaseolina, Sclerotinia sclerotiorum, Botrytis cinerea, Penicillium digitatum,* among others.

10. **COMPOSITION FOR COATING AND ENCRUSTING INDUSTRIAL OR NON-INDUSTRIAL SEEDS FOR BIOLOGICAL CONTROL OF PHYTONEMATODE AND PHYTOPATHOGENIC SPECIES,** according to claim 1, ***characterized* in that** it is a composition to be used for coating and encrusting cultivated plants including, without being limited to, *Brachiaria spp. (Brachiaria brizantha, Brachiaria decumbens, Brachiaria humidicola, Brachiaria mutica, Brachiaria ruziziensls, Brachiaria arrecta, Brachiaria dictyneura], Panicum spp. (Panicum maximum], Sorghum spp., Pennisetum americanum, Glycine max, Zea mavs, Gossypium hirsutum,* greenery *(Solanum Ivcopersicum, Allium cepa, Lactuca sativa. Daucus careta, Capsicum annuum),* forestry (*Eucalyptus spp., Tectona qrandis, Hevea brasiliensis, Pinus sp*.), *Nicotiana tabacum,* ornamental, *Crotalaria spp. (Crotalaria juncea, Crotalaria spectobilis, Crotalaria ochroleuca, Crotalaria paulina, Crotalaria breviflora*).
